# EUROPÄISCHE PATENTANMELDUNG

(11) **EP 3 639 968 A1**
(43) Veröffentlichungstag der Anmeldung: **22.04.2020**
(21) Anmeldenummer: 19203072.4
(22) Anmeldetag: 14.10.2019
(51) Int. Cl.: B23K 26/70, F16P 1/06, B23Q 11/08

(54) **VORRICHTUNG ZUR EINHAUSUNG EINER SCHNEIDANLAGE UND SCHNEIDANLAGE**

(30) Priorität: 15.10.2018 DE 202018105888 U
(71) Anmelder: Sato Schneidsysteme GmbH & Co. KG, 41169 Mönchengladbach (DE)
(72) Erfinder: SAEHSEN, Wolfang, 41169 Mönchengladbach (DE)
(74) Vertreter: Paul & Albrecht Patentanwälte PartG mbB

(57) **Zusammenfassung**

Vorrichtung (1) zur allseitigen Einhausung einer Schneidanlage (2), insbesondere einer Laserschneidanlage und vorzugsweise einer zweidimensionalen Laserschneidanlage mit
mindestens zwei, insbesondere genau drei oder vier, Einhausungssegmenten (8, 9, 10, 11), die einen sich in einer Längsrichtung (L) erstreckenden, nach unten offenen U-förmigen Querschnitt aufweisen und stirnseitig offen sind,
wobei die Einhausungssegmente (8, 9, 10, 11) teleskopartig zwischen einem ausgefahrenen Zustand, in welchem die Einhausungssegmente (8, 9, 10, 11) einen Arbeitsraum zur Aufnahme einer Schneidanlage (2) nach oben und zu den Seiten hin über seine gesamte Länge und seine gesamte Höhe bis in Bodennähe einhausen, und einem eingefahrenen Zustand, in welchem die Einhausungssegmente (8, 9, 10, 11), insbesondere sämtliche Einhausungssegmente (8, 9, 10, 11), in Längsrichtung (L) ineinander positioniert sind, bewegbar sind, sowie Schneidanlage, insbesondere Laserschneidanlage mit einer Vorrichtung zur Einhausung.

## Beschreibung

Die vorliegende Erfindung betrifft eine Vorrichtung zur allseitigen Einhausung einer Schneidanlage, insbesondere einer Laserschneidanlage und vorzugsweise einer zweidimensionalen Laserschneidanlage. Ferner betrifft die Erfindung eine Schneidanlage.

Einhausungen können bei Schneidanlagen erforderlich sein, um die Umgebung gegen während des Schneidprozesses entstehende Emissionen abzuschirmen. Dabei kann es sich um Schallemissionen handeln, die bei einer Laserschneidanlage aufgrund der hohen Geschwindigkeit der Gasströmungen beim Schneidprozess entstehen können. Auch beim Wasserstrahlschneiden und beim autogenen Brennschneiden kann eine starke Schallentwicklung stattfinden. Bei Laserschneidprozessen kommt hinzu, dass bei Verwendung von Laserquellen mit einer hinreichenden Leistung durch die Interaktion des Laserstrahls mit dem Werkstück elektromagnetische Strahlung, insbesondere Röntgenstrahlung entsteht. Die üblichen Richtlinien zur Arbeitssicherheit erfordern es, derartige Schneidanlagen, insbesondere solche, bei denen Röntgenstrahlung entsteht, umfassend gegenüber der Umgebung, insbesondere dem Bedienpersonal abzuschirmen.

Eine Vorrichtung zur Einhausung einer Laserbearbeitungsanlage wird in der DE 10 2014 113 878 A1 offenbart. Diese umfasst mehrere Seitenwandelemente, die umlaufend um die Laserbearbeitungsanlage angeordnet sind und diese zu allen Seiten hin einhausen. Die Seitenwandelemente besitzen dabei mehrere verschließbare Öffnungen zum Einbringen oder Entnehmen von Material und Betriebsstoffen in den, bzw. aus dem innenliegenden Arbeitsraum. Dabei sind die Seitenwandelemente fest am Boden verankert und hausen somit den Arbeitsraum bis zum Boden hin umlaufend ein.

Wenngleich sich eine derartige Vorrichtung zur Einhausung einer Laserbearbeitungsanlage grundsätzlich bewährt hat, so kann als nachteilig empfunden werden, dass bedingt durch die festen Seitenwände der Arbeitsraum zum Einbringen und Entnehmen von Werkstücken nicht leicht zugänglich ist. Dies gilt insbesondere, wenn es sich um eine Schneidanlage zur Bearbeitung von plattenförmigen Werkstücken mit relativ großen Abmessungen handelt. Auch für Wartungsarbeiten kann eine derartige Vorrichtung zur Einhausung als schwierig empfunden werden, da die Seitenwandungen fest im Boden verankert sind und die Zugänglichkeit zu einer im Inneren angeordneten Materialbearbeitungsanlage erheblich eingeschränkt ist, bzw. diese Seitenwandungen für Wartungsarbeiten teilweise oder vollständig demontiert werden müssen.

Aufgabe der vorliegenden Erfindung ist es somit, eine Vorrichtung zur Einhausung einer Schneidanlage bereitzustellen, welche die zuvor genannten Nachteile vermeidet und insbesondere eine gute Zugänglichkeit zum Durchführen von Wartungsarbeiten und zum Nachführen von Werkstücken bei unterbrochenem Betrieb ermöglicht und somit Stillstandzeiten der Schneidanlage minimiert werden.

Diese Aufgabe wird durch eine Vorrichtung zur Einhausung einer Schneidanlage der eingangs genannten Art dadurch gelöst, dass diese mindestens zwei, insbesondere genau drei oder vier, Einhausungssegmente, die einen sich in einer Längsrichtung erstreckenden, nach unten offenen U-förmigen Querschnitt aufweisen und stirnseitig offen sind, wobei die Einhausungssegmente teleskopartig zwischen einem ausgefahrenen Zustand, in welchem die Einhausungssegmente einen Arbeitsraum zur Aufnahme einer Schneidanlage nach oben und zu den Seiten hin über seine gesamte Länge und seine gesamte Höhe bis in Bodennähe einhausen, und einem eingefahrenen Zustand, in welchem die Einhausungssegmente, insbesondere sämtliche Einhausungssegmente, in Längsrichtung ineinander positioniert sind, bewegbar sind, und Stirnwandelemente, die ausgebildet sind, die offenen Stirnseiten des Arbeitsraums im ausgefahrenen Zustand der Einhausungssegmente vollständig zu überdecken, besitzt.

Der Erfindung liegt somit die Überlegung zugrunde, einen großen Teilbereich des Arbeitsraums bei Betriebsunterbrechungen zum Werkstückwechsel oder für Wartungsarbeiten dadurch zugänglich zu machen, dass mehrere Einhausungselemente in einer Längsrichtung teleskopartig ineinander verschiebbar bzw. verfahrbar sind. Im ausgefahrenen Zustand sind diese in der Lage, den gesamten Arbeitsraum in Längsrichtung zu den Seiten und nach oben hin einzuhausen. Im eingefahrenen Zustand sind die Einhausungssegmente in Längsrichtung ineinander positioniert und überdecken entsprechend ihrer Anzahl nur einen geringen Teil der Gesamtlänge des Arbeitsraums, so dass ein wesentlicher Teil des Arbeitsraums von oben und von den Seiten zugänglich ist. Die im ausgefahrenen Zustand der Einhausungssegmente noch offenen Stirnseiten werden durch entsprechende Stirnwandelemente verrschlossen, so dass eine im Arbeitsraum angeordnete Schneidanlage zu allen Seiten hin eingehaust ist. Dadurch wird es ermöglicht, insbesondere für Schneidanlagen zur Bearbeitung von großflächigen, plattenförmigen Werkstücken, einen einfachen Zugang zum Entnehmen des bearbeiteten Werkstücks und zum Einbringen eines neuen Werkstücks bereitzustellen, gleichzeitig aber die Schneidanlage zu allen Seiten hin vollständig einzuhausen.

Das teleskopartige Verschieben der Einhausungssegmente wird dadurch ermöglicht, dass sich die Außenabmessungen der Einhausungssegmente in Höhen- und Seitenrichtung jeweils zueinander unterscheiden. Um ein teleskopartiges Verschieben der Einhausungssegmente ineinander zu ermöglichen, ist vorgesehen, dass die Außenabmessungen eines Segments geringfügig kleiner sind als die Innenabmessungen des jeweils nächstgrößeren Segments, bzw. die Innenabmessungen eines Segments geringfügig größer sind als die Außenabmessungen des jeweils nächstkleineren Segments.

In weiterer Ausgestaltung der Erfindung umfassen die Einhausungssegmente zwei einander gegenüberliegende, insbesondere ebene Seitenwandungen und eine Deckenwandung. Dadurch ergibt sich ein in Längsrichtung im Wesentlichen rechteckiger Querschnitt des Arbeitsraums.

Die Deckenwandung kann dabei giebeldachartig ausgebildet sein, und zwei im Wesentlichen ebene Teilabschnitte aufweisen, die zu den Seiten hin abfallen. In bevorzugter Weise schließen die beiden Teilabschnitte der Deckenwandung mit den Seitenwandungen jeweils einen Winkel zwischen 90° und 120°, insbesondere zwischen 91° und 100° ein. Durch die Neigung der beiden Teilabschnitte der Deckenwandung kann sichergestellt werden, dass möglicherweise auftretende Feuchtigkeit oder Nässe von außen zu den Seitenwandungen hin abfließen kann und sich nicht auf der Deckenwandung ansammelt und langfristig zu Undichtigkeiten beispielsweise in Folge von Korrosion kommen kann.

Alternativ können die Einhausungssegmente einen halbkreisförmigen oder halbelliptischen Querschnitt aufweisen.

In weiterer bevorzugter Ausgestaltung der Erfindung weisen die Einhausungssegmente jeweils die gleiche Länge auf. Dadurch wird sichergestellt, dass die Einhausungssegmente im eingefahrenen Zustand vollständig ineinander positioniert sind.

Bevorzugt sind im eingefahrenen Zustand sämtliche Einhausungssegmente ineinander positioniert. Auf diese Weise wird erreicht, dass sich die Einhausungssegmente im eingefahrenen Zustand über eine möglichst geringe Länge erstrecken und somit ein großflächiger und zusammenhängender Zugang zu dem Arbeitsraum gegeben ist. In vorteilhafter Weise sind die Einhausungssegmente im eingefahrenen Zustand an einer Stirnseite des Arbeitsraums positioniert.

Die Einhausungssegmente und die Stirnwandelemente sind vorzugsweise ausgebildet, um im ausgefahrenen Zustand im Arbeitsraum entstehende Emissionen, insbesondere Strahlung und vorzugsweise Röntgenstrahlung abzuschirmen.

Ferner können die Einhausungssegmente und/oder die Stirnwandelemente von innen nach außen mehrschichtig aufgebaut sein und insbesondere außenseitig eine Oberfläche aus einem Metallblech, vorzugsweise einem Aluminium- oder Stahlblech aufweisen. Durch einen mehrschichtigen Aufbau können Schallwellen besser absorbiert werden, sowie im Falle von im Arbeitsraum entstehender elektromagnetischer Strahlung eine besonders effektive Abschirmwirkung realisiert werden.

In weiterer Ausgestaltung der Erfindung können die Einhausungssegmente und/oder die Stirnwandelemente mehrere Wandungsprofile umfassen oder zumindest teilweise aus solchen bestehen, wobei die Wandungsprofile miteinander verbunden sind. Durch die Verwendung von Wandungsprofilen, welche insbesondere standardisiert vorgefertigt werden können, kann ein einfacher Aufbau der Einhausungssegmente bzw. der Stirnwandelemente realisiert werden. Ferner ist eine flexible Anpassung der Einhausungssegmente oder der Stirnwandelemente möglich, abhängig von den erforderlichen Abmessungen des Arbeitsraums.

Die Wandungsprofile können Verbindungsmittel aufweisen, welche ausgebildet und geeignet sind, ein Wandungsprofil mit den jeweils benachbarten Wandungsprofilen zu verbinden.

Um eine sichere Abschirmung vor den Emissionen, welche im Arbeitsraum auftreten können, zu erreichen, weisen die Wandungsprofile bevorzugt von innen nach außen mehrere zumindest im Wesentlichen parallel angeordnete Bleche, insbesondere genau drei Bleche auf, zwischen denen Hohlräume ausgebildet sind, wobei die Bleche bevorzugt durch Streben miteinander verbunden sind. Durch eine solche mehrlagige Ausgestaltung der Wandungsprofile wird eine hohe Sicherheit beispielsweise gegen Laserstrahlung erreicht. Sollte versehentlich ein Laserstrahl auf die Wandungsprofile treffen, so wird zunächst lediglich das innenseitig angeordnete Blech beschädigt und ein Austreten des Laserstrahls in die Umgebung durch die weiteren außenliegenden Bleche verhindert. Ferner führt eine solche Ausgestaltung zu einer akustischen Entkoppelung, so dass eine gute Abschirmung auch hinsichtlich des von einer Schneidanlage üblicherweise erzeugten Lärms erreicht wird.

Die Hohlräume können dabei mit einem absorbierenden Material oder einem Gas, insbesondere Stickstoff oder Luft, gefüllt sein. Prinzipiell ist es auch denkbar, in den Hohlräumen einen Überdruck vorzusehen und einen Drucksensor vorzusehen, um eine Beschädigung der Wandungsprofile detektieren zu können. Die Wandungsprofile bestehen bevorzugt aus einem metallischen Werkstoff, besonders bevorzugt aus einer Aluminiumlegierung und sind bevorzugt als Strangpressprofile hergestellt worden. Zwischen zwei benachbarten Wandungsprofilen können Dichtungen angeordnet sein, um eine vollständige Abdichtung insbesondere gegen Strahlung und Schall zu realisieren.

Ferner können die Wandungsprofile innenseitig und/oder außenseitig eine profilierte Oberfläche aufweisen. Insbesondere eine innenseitig profilierte Oberfläche verhindert, dass ein versehentlich auftreffender Laserstrahl unmittelbar reflektiert wird und im Arbeitsraum Schaden verursachen kann. Die profilierte Oberfläche kann beispielsweise sich in eine Längsrichtung des Wandungsprofils erstreckende Rillen insbesondere mit einem dreieckigen Querschnitt aufweisen, wobei in den Rillen Abrundungen vorgesehen sein können.

In weiterer Ausgestaltung der Erfindung sind an den Einhausungssegmenten Dichtelemente vorgesehen, um im ausgefahrenen Zustand Spalte zwischen den einzelnen Einhausungssegmenten gegen im Arbeitsraum entstehende Strahlung, insbesondere Röntgenstrahlung abzudichten. Derartige Dichtelemente können für eine wirksame Abschirmung erforderlich sein, da die Einhausungssegmente ineinander verschiebbar sind und somit Spiel in Seiten- und Höhenrichtung zwischen den einzelnen Segmenten vorhanden sein muss, wodurch sich im ausgefahrenen Zustand Spalten, durch die Emissionen austreten können, ergeben.

Vorteilhafterweise sind die Einhausungssegmente an einem Führungssystem in Längsrichtung beweglich gelagert. Konkret kann das Führungssystem in den Bereichen beider seitlichen Ränder des Arbeitsraums jeweils zwei sich parallel zueinander in Längsrichtung erstreckende Schienen aufweisen, die bevorzugt übereinander angeordnet sind. Die Schienen können einen kreisförmigen Querschnitt aufweisen.

In weiterer Ausgestaltung der Erfindung können die Einhausungssegmente mittels Linearlagern, insbesondere Lineargleitlagern an den Schienen bewegbar geführt werden.

Die Schienen können an Trägerprofilen befestigt sein, die vorzugsweise aus Stahl bestehen und/oder einen L-förmigen Querschnitt aufweisen können. Die Trägerprofile können zur Befestigung am Boden oder am Maschinenbett oder Maschinengestell einer Schneidanlage vorgesehen sein. Durch eine bodenseitige Befestigung der Trägerprofile kann sichergestellt werden, dass die erfindungsgemäße Vorrichtung den Arbeitsraum bis zum Boden hin wirksam einhaust. Nur dadurch kann eine zuverlässige Abschirmung gegenüber im Arbeitsraum entstehenden Emissionen gewährleistet werden. Alternativ kann dies bei einem bis zum Boden reichenden Maschinenbett oder Maschinengestell einer Schneidanlage auch dadurch erreicht werden, dass die Trägerprofile am Maschinenbett oder -gestell einer Schneidanlage befestigt werden.

Vorzugsweise erstrecken sich die Trägerprofile über die gesamte Länge des Arbeitsraums.

Die Vorrichtung zur Einhausung kann ferner eine Antriebseinheit umfassen, insbesondere eine elektrische Antriebseinheit zum Bewegen der Einhausungssegmente. Dies kann insbesondere dann erforderlich sein, wenn die Größe des erforderlichen Arbeitsraums dazu führt, dass die Einhausungssegmente ein Gewicht aufweisen, welches nicht mehr manuell verschoben werden kann.

In weiterer Ausgestaltung der Erfindung umfasst mindestens ein Stirnwandelement einen stationären Teilabschnitt zur festen Verankerung am Boden oder in Bodennähe und einen bewegbaren Teilabschnitt. Dabei kann vorgesehen sein, dass der bewegbare Teilabschnitt mittels eines Hebemechanismus auf den stationären Teilabschnitt aufsetzbar ist, im die Stirnseite des Arbeitsraums vollständig zu verschließen, und von dem stationären Teilabschnitt abnehmbar ist, um einen Zugang zu dem Arbeitsraum von außen zu ermöglichen.

Dieser Ausgestaltung liegt die Überlegung zugrunde, auch von mindestens einer Stirnseite einen Zugang zum Arbeitsraum zu ermöglichen. Dies kann sinnvoll sein, wenn z.B. bei einem länger andauernden Bearbeitungsprozess kleinere Störungen auftreten und aus Zeitgründen nicht die Einhausungssegmente vom ausgefahrenen Zustand in den eingefahrenen Zustand bewegt werden sollen. Des Weiteren kann ein derartiger Zugang von einer Stirnseite auch das Einbringen von Material, insbesondere zum Austauschen von Werkstücken ermöglichen, bzw. erleichtern.

Vorteilhafterweise kann sich der stationäre und der bewegbare Teilabschnitt über die gesamte Breite der Stirnseite des Arbeitsraums erstrecken.

Der stationäre Teilabschnitt kann stirnseitig an den Trägerprofilen, an welchen die Schienen zum Führen der Einhausungssegmente fixiert sind, befestigt sein.

In weiterer Ausgestaltung der Erfindung kann mindestens ein Stirnwandelement ein sich über einen Teilbereich der Stirnseite des Arbeitsraums erstreckendes Rolltor aufweisen. Dies stellt ebenfalls eine effiziente Möglichkeit dar, einen stirnseitigen Zugang um Arbeitsraum selbst bei im ausgefahrenen Zustand angeordneten Einhausungssegmenten zu ermöglichen.

Ferner kann mindestens ein Stirnwandelement an einem im ausgefahrenen Zustand in Längsrichtung außenliegenden Einhausungssegment fixiert sein und/oder eine Tür, insbesondere eine Anschlagtür aufweisen.

Des Weiteren kann mindestens ein Stirnwandelement oder ein Einhausungssegment ein Fensterelement aufweisen. Dadurch kann die Beobachtung des Bearbeitungsprozesses im Arbeitsraum von außen durch einen Bediener ermöglicht werden.

Die der Erfindung zugrundeliegende Aufgabe wird ferner gelöst durch eine Schneidanlage, insbesondere Laserschneidanlage und vorzugsweise zweidimensionale Laserschneidanlage zur Bearbeitung von plattenförmigen Werkstücken mit einer Vorrichtung zur allseitigen Einhausung wie zuvor beschrieben. In bevorzugter Ausgestaltung ist die Schneidanlage dabei als Faserlaserschneidanlage ausgebildet.

Für die weiteren Ausgestaltungen der Erfindung wird auf die Unteransprüche, sowie auf die nachfolgende Beschreibung eines Ausführungsbeispiels unter Bezugnahme auf die beiliegende Zeichnung verwiesen. In der Zeichnung zeigt:
- Figur 1: eine erfindungsgemäße Vorrichtung zur Einhausung einer Laserschneidanlage im eingefahrenen Zustand in einer dreidimensionalen Ansicht;
- Figur 2: die in Figur 1 dargestellte erfindungsgemäße Vorrichtung zur Einhausung einer Laserschneidanlage in einer anderen dreidimensionalen Ansicht;
- Figur 3: die in den Figuren 1 und 2 dargestellte erfindungsgemäße Vorrichtung zur Einhausung im ausgefahrenen Zustand in einer dreidimensionalen Ansicht;
- Figur 4: die in den Figuren 1 bis 3 dargestellte erfindungsgemäße Vorrichtung zur Einhausung in einer Detailschnittansicht;
- Figur 5: ein Teilabschnitt der Seitenwandung eines Einhausungssegments in einer Schnittansicht.

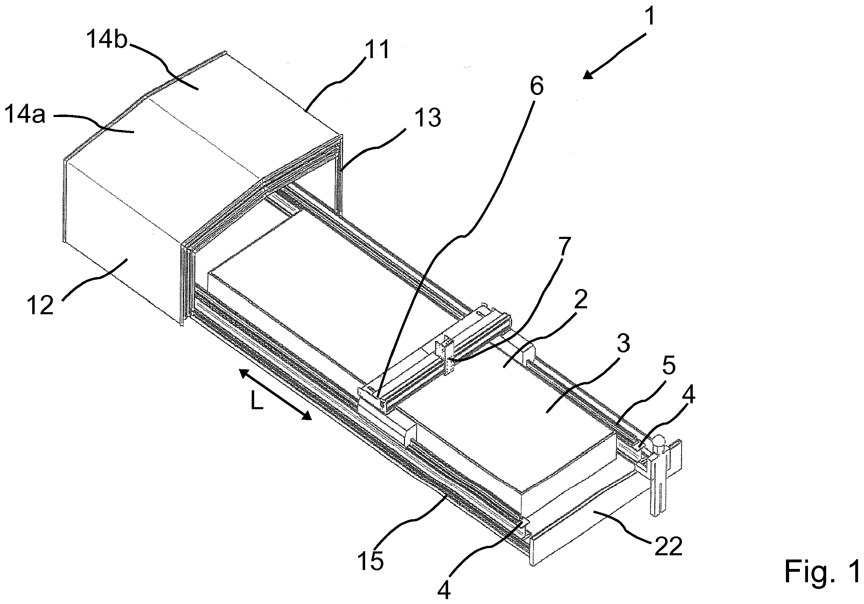

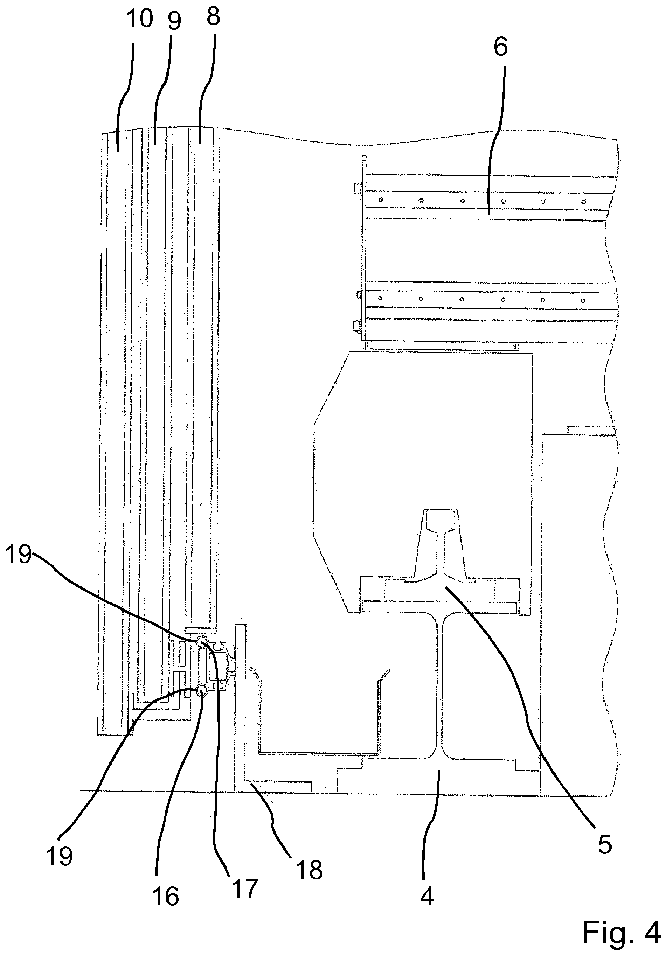

In den Figuren 1 bis 4 ist eine Vorrichtung 1 zur allseitigen Einhausung einer zweidimensionalen Laserschneidanlage gemäß der vorliegenden Erfindung abgebildet. Die Laserschneidanlage 2 zur Bearbeitung von großflächigen, plattenförmigen Werkstücken besitzt einen länglichen Maschinentisch 3 zur Aufnahme der Werkstücke. Auf beiden Seiten des Maschinentischs 3 ist jeweils ein auf einem Stahlträger 4 angeordnetes Führungsprofil 5 als Auflager für ein in Längsrichtung verschiebbares Portal 6 mit einem Schneidkopf 7 zur Werkstückbearbeitung angeordnet.

Die Vorrichtung 1 zur Einhausung der Laserschneidanlage 2 umfasst vier Einhausungssegmente 8, 9, 10, 11, die sich jeweils einen sich in einer Längsrichtung L erstreckenden und nach unten und stirnseitig offenen U-förmigen Querschnitt aufweisen. Konkret besitzt jedes Einhausungssegment zwei einander gegenüberliegende, ebene und senkrechte Seitenwandungen 12, 13 und eine giebeldachartig ausgebildete Deckenwandung 14, welche aus zwei Ebenen Teilabschnitten 14a, 14b besteht, die zu den Seiten hin abfallen und mit den Seitenwandungen 12, 13 einen Winkel von etwa 95° einschließen.

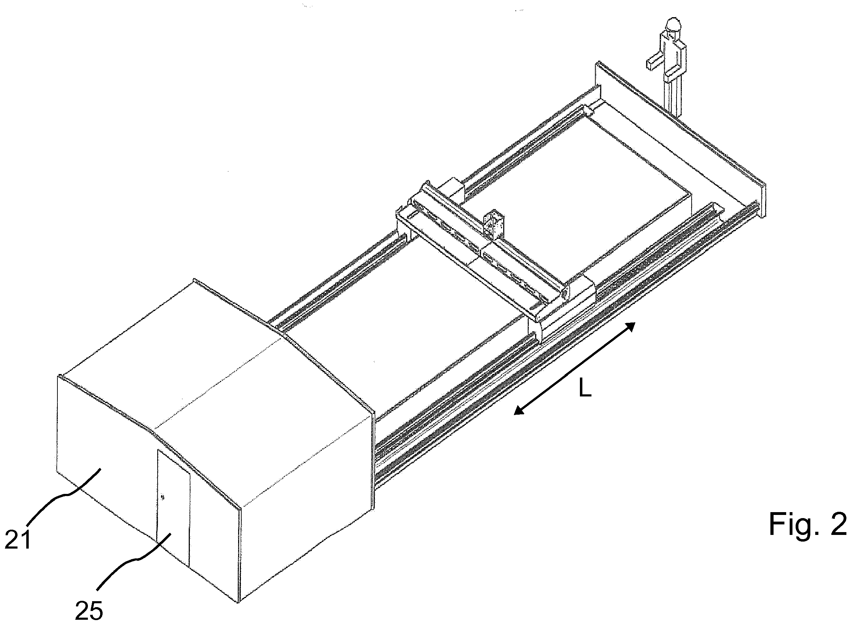

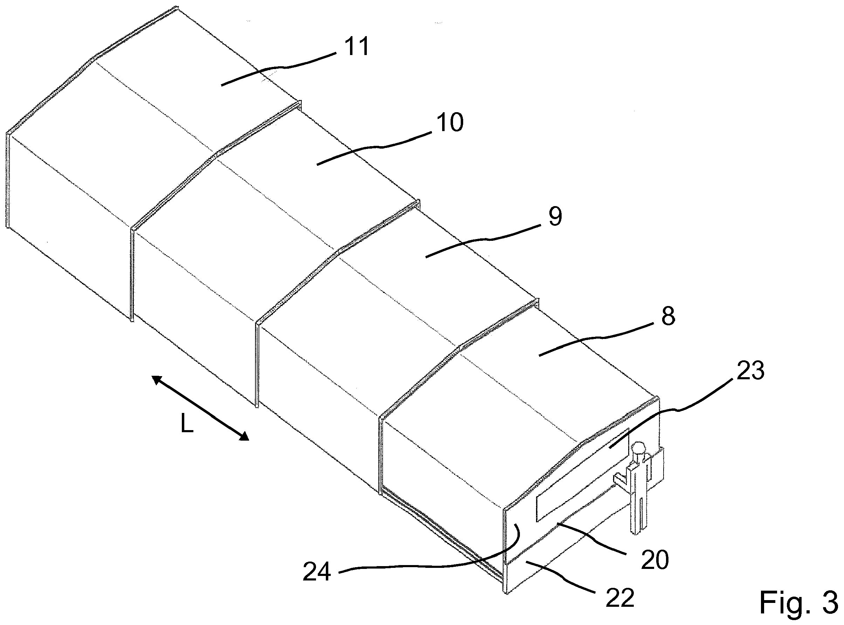

Die Einhausungssegmente 8, 9, 10, 11, welche die gleiche Länge aufweisen, sind in Längsrichtung L teleskopartig zwischen einer ausgefahrenen Position und einer eingefahrenen Position verschiebbar. In Figur 1 und in Figur 2 befinden sich die Einhausungssegmente 8, 9, 10, 11 im eingefahrenen Zustand, in welchem die Einhausungssegmente 8, 9, 10, 11 in Längsrichtung L ineinander positioniert sind. In Figur 3 sind die Einhausungssegmente 8, 9, 10, 11 im ausgefahrenen Zustand dargestellt. Dabei wird ein Arbeitsraum zur Aufnahme der Schneidanlage 2 nach oben und zu den Seiten hin über seine gesamte Länge und seine gesamte Höhe bis in Bodennähe eingehaust.

Konstruktiv wird die Verschiebbarkeit der Einhausungssegmente 8, 9, 10, 11 in Längsrichtung L durch deren bewegliche Lagerung in einem Führungssystem 15 realisiert. Dieses umfasst jeweils in beiden seitlichen Randbereichen des Arbeitsraums angeordnete Schienen 16, 17, die an einem Trägerprofil 18 mit einem L-förmigen Querschnitt als Stahl befestigt sind. Die Schienen 16, 17 weisen einen kreisförmigen Querschnitt auf und sind zur Sicherstellung der Stabilität der Einhausungssegmente 8, 9, 10, 11 übereinander angeordnet. Sowohl die Schienen 16, 17, als auch das am Boden befestigte Trägerprofil 18 erstrecken sich in Längsrichtung L über die gesamte Länge des Arbeitsraums. Jedes Einhausungssegment 8, 9, 10, 11 ist mit mehreren zu den Schienen 16, 17 korrespondierenden Lineargleitlagern 19 bewegbar geführt.

Zum Bewegen der Einhausungssegmente 8, 9, 10, 11 zwischen der eingefahrenen Position und der ausgefahrenen Position ist eine nicht dargestellte elektrische Antriebseinheit vorgesehen.

Wie in den Figuren 2 und 3 erkennbar ist, umfasst die Vorrichtung zur allseitigen Einhausung ferner zwei Stirnwandelemente 20, 21, die ausgebildet sind, die offenen Stirnseiten des Arbeitsraums im ausgefahrenen Zustand der Einhausungssegmente 8, 9, 10, 11 vollständig zu überdecken.

Das Stirnwandelement 20 umfasst einen fest an den Stirnseiten der Trägerprofile 18 fixierten stationären Teilabschnitt 22 und einen mit einem Fensterelement 23 versehenen bewegbaren Teilabschnitt 24. Der bewegbare Teilabschnitt 24 ist mittels eines nicht dargestellten Hebemechanismus auf den stationären Teilabschnitt 22 aufsetzbar und erstreckt sich, wie auch der stationäre Teilabschnitt 22 über die gesamte Breite der Stirnseite des Arbeitsraums.

Der bewegbare Teilabschnitt 24 kann vom stationären Teilabschnitt 22 abgenommen werden, um - wie in den Figuren 1 und 2 dargestellt - einen Zugang zu dem Arbeitsraum von außen zu ermöglichen.

Das zweite Stirnwandelement 21 ist an einem im ausgefahrenen Zustand in Längsrichtung außen liegenden Einhausungssegment 11 fixiert und besitzt eine Anschlagtür 25 zum Betreten des Arbeitsraums durch einen Bediener.

Die beschriebene Vorrichtung zur allseitigen Einhausung einer Schneidanlage ermöglicht aufgrund der teleskopartig ineinander verschiebbaren Einhausungssegmente 8, 9, 10, 11 und aufgrund des Stirnwandelements 20 mit seinem bewegbaren Teilabschnitt 24 einen günstigen Zugang zu der Laserschneidanlage 2 und führt zu einer deutlichen Verkürzung der Bestückungszeiten, wenn beispielsweise ein neues plattenförmiges Werkstück eingesetzt werden muss, sowie zu kürzeren Stillstandzeiten bei Wartungsarbeiten.

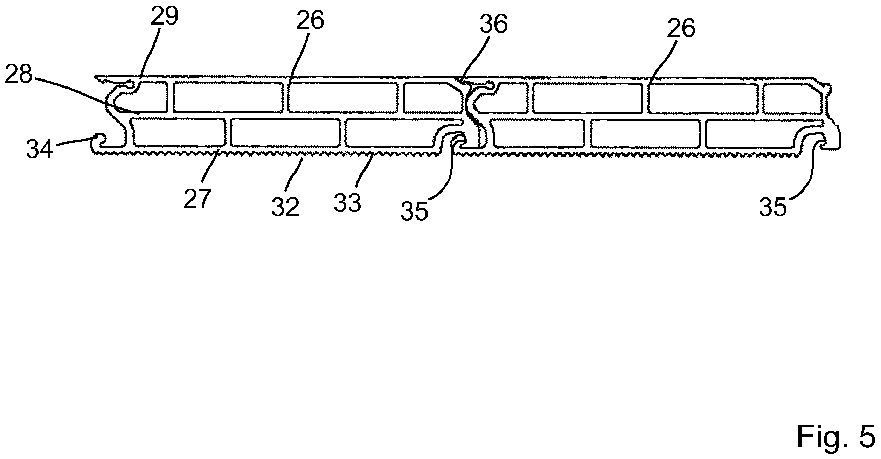

In der Figur 5 ist schematisch der Aufbau eines Teilabschnitts der Seitenwandung 12 eines Einhausungssegments 8, 9, 10, 11 dargestellt. Dieser umfasst mehrere, vorliegend zwei übereinander dargestellte Wandungsprofile 26, die über geeignete Verbindungsmittel miteinander verbunden sind. Die Wandungsprofile 26 umfassen von innen nach außen drei parallel zueinander angeordnete Bleche 27, 28, 29, zwischen denen Hohlräume 30 ausgebildet sind. Die Bleche 27, 28, 29 sind durch mehrere Streben 31 miteinander verbunden.

Die nach innen, in der Figur 5 nach rechts gerichtete Oberfläche des Blechs 27 weist eine Profilierung 32 auf. Diese umfasst vorliegend sich in Längsrichtung L erstreckende Rillen mit einer dreieckigen Grundform. In den Kanten der Rillen sind Abrundungen 33 ausgebildet.

Die beiden dargestellten benachbarten Wandungsprofile 26 sind über einen formschlüssig wirkenden Rastmechanismus miteinander verbunden. Dieser Rastmechanismus umfasst einen Einklinkvorsprung 34, welcher in eine korrespondierende Ausnehmung 35 des benachbarten Wandungsprofils 26 eingebracht ist. Auf der gegenüberliegenden, außenliegenden Seite des Wandungsprofils 26 ist ein Rastmechanismus 36 ausgebildet, welcher die beiden Wandungsprofile 26 aneinander verrastet.

Das Verbi+nden der Wandungsprofile 26 wird dadurch realisiert, dass der Einklinkvorsprung 34 eines Wandungsprofils 26 mit der Ausnehmung 35 des benachbarten Wandungsprofils 26 in Eingriff gebracht wird. Dadurch wird eine sich in Längsrichtung L erstreckende Drehachse definiert, um welche die beiden Wandungsprofile 26 relativ zueinander verschwenkt werden können. Durch eine Schwenkbewegung der beiden Wandungsprofile 26 relativ zueinander wird der Rastmechanismus 36 verrastet, so dass die beiden Wandungsprofile 26 zueinander ausgerichtet und aneinander fixiert werden.

### Bezugszeichenliste

- 1: Vorrichtung zur allseitigen Einhausung
- 2: Laserschneidanlage
- 3: Maschinentisch
- 4: Stahlträger
- 5: Führungsprofil
- 6: Portal
- 7: Schneidkopf
- 8: Einhausungssegment
- 9: Einhausungssegment
- 10: Einhausungssegment
- 11: Einhausungssegment
- 12: Seitenwandungen
- 13: Seitenwandungen
- 14: Deckenwandung
- 14a, 14b: Teilabschnitte der Deckenwandung
- 15: Führungssystem
- 16, 17: Schienen
- 18: Trägerprofil
- 19: Lineargleitlager
- 20, 21: Stirnwandelemente
- 22: stationärer Teilabschnitt
- 23: Fensterelement
- 24: bewegbarer Teilabschnitt
- 25: Anschlagtür
- 26: Wandungsprofil
- 27, 28, 29: Blech
- 30: Hohlraum
- 31: Strebe
- 32: Profilierung
- 33: Abrundung
- 34: Einklinkvorsprung
- 35: Rastmechanismus

- L: Längsrichtung

## Patentansprüche

1. Vorrichtung (1) zur allseitigen Einhausung einer Schneidanlage (2), insbesondere einer Laserschneidanlage und vorzugsweise einer zweidimensionalen Laserschneidanlage mit
mindestens zwei, insbesondere genau drei oder vier, Einhausungssegmenten (8, 9, 10, 11), die einen sich in einer Längsrichtung (L) erstreckenden, nach unten offenen U-förmigen Querschnitt aufweisen und stirnseitig offen sind,
wobei die Einhausungssegmente (8, 9, 10, 11) teleskopartig zwischen einem ausgefahrenen Zustand, in welchem die Einhausungssegmente (8, 9, 10, 11) einen Arbeitsraum zur Aufnahme einer Schneidanlage (2) nach oben und zu den Seiten hin über seine gesamte Länge und seine gesamte Höhe bis in Bodennähe einhausen, und einem eingefahrenen Zustand, in welchem die Einhausungssegmente (8, 9, 10, 11), insbesondere sämtliche Einhausungssegmente (8, 9, 10, 11), in Längsrichtung (L) ineinander positioniert sind, bewegbar sind, und
Stirnwandelementen (20, 21), die ausgebildet sind, die offenen Stirnseiten des Arbeitsraums im ausgefahrenen Zustand der Einhausungssegmente (8, 9, 10, 11) vollständig zu überdecken.

2. Vorrichtung (1) nach Anspruch 1, **dadurch gekennzeichnet, dass** die Einhausungssegmente (8, 9, 10, 11) zwei einander gegenüberliegende, insbesondere ebene Seitenwandungen (12, 13) und eine Deckenwandung (14) umfassen, wobei die Deckenwandung (14) insbesondere giebeldachartig ausgebildet ist und insbesondere zwei im Wesentlichen ebene Teilabschnitte (14a, 14b) aufweist, die zu den Seiten hin abfallen, wobei bevorzugt die beiden Teilabschnitte (14a, 14b) der Deckenwandung (14) mit den Seitenwandungen (12, 13) jeweils einen Winkel zwischen 90° und 120°, besonders bevorzugt zwischen 91° und 100° einschließen.

3. Vorrichtung (1) nach Anspruch 1, **dadurch gekennzeichnet, dass** die Einhausungssegmente einen halbkreisförmigen oder halbelliptischen Querschnitt aufweisen.

4. Vorrichtung (1) nach einem der vorherigen Ansprüche, **dadurch gekennzeichnet, dass** die Einhausungssegmente (8, 9, 10, 11) jeweils die gleiche Länge aufweisen.

5. Vorrichtung (1) nach einem der vorherigen Ansprüche, **dadurch gekennzeichnet, dass** die Einhausungssegmente (8, 9, 10, 11) und die Stirnwandelemente (20, 21) ausgebildet sind, um im ausgefahrenen Zustand im Arbeitsraum entstehende Emissionen, insbesondere Strahlung und vorzugsweise Röntgenstrahlung abzuschirmen, und/oder dass an den Einhausungssegmenten (8, 9, 10, 11) Dichtelemente vorgesehen sind, um im ausgefahrenen Zustand Spalte zwischen den einzelnen Einhausungssegmenten (8, 9, 10, 11) gegen im Arbeitsraum entstehende Strahlung, insbesondere Röntgenstrahlung abzudichten.

6. Vorrichtung (1) nach einem der vorherigen Ansprüche, **dadurch gekennzeichnet, dass** die Einhausungssegmente (8, 9, 10, 11) und/oder die Stirnwandelemente (20, 21) von innen nach außen mehrschichtig aufgebaut sind und insbesondere außenseitig eine Oberfläche aus einem Metallblech, vorzugsweise einem Aluminium- oder Stahlblech aufweisen.

7. Vorrichtung (1) nach einem der vorherigen Ansprüche, **dadurch gekennzeichnet, dass** die Einhausungssegmente (8, 9, 10, 11) und/oder die Stirnwandelemente (20, 21) mehrere Wandungsprofile (26) umfassen oder zumindest teilweise aus solchen bestehen, wobei die Wandungsprofile (26) miteinander verbunden sind.

8. Vorrichtung (1) nach Anspruch 7, **dadurch gekennzeichnet, dass** die Wandungsprofile (26) Verbindungsmittel aufweisen, welche ausgebildet und geeignet sind, ein Wandungsprofil mit den jeweils benachbarten Wandungsprofilen (26) zu verbinden, und/oder dass die Wandungsprofile (26) von innen nach außen mehrere zumindest im Wesentlichen parallel angeordnete Bleche (27, 28, 29), insbesondere genau drei Bleche aufweisen, zwischen denen Hohlräume (30) ausgebildet sind, wobei die Bleche (27, 28, 29) bevorzugt durch Streben (31) miteinander verbunden sind, und/oder dass die Wandungsprofile (26) innenseitig und/oder außenseitig eine profilierte Oberfläche aufweisen.

9. Vorrichtung (1) nach einem der vorherigen Ansprüche, **dadurch gekennzeichnet, dass** die Einhausungssegmente (8, 9, 10, 11) an einem Führungssystem (15) in Längsrichtung (L) beweglich gelagert sind.

10. Vorrichtung (1) nach Anspruch 9, **dadurch gekennzeichnet, dass** das Führungssystem (15) in den Bereichen beider seitlichen Ränder des Arbeitsraums jeweils zwei sich parallel zueinander in Längsrichtung (L) erstreckende Schienen (16, 17) aufweist, wobei die Schienen (16, 17) insbesondere übereinander angeordnet sind und/oder die Schienen (16, 17) insbesondere einen kreisförmigen Querschnitt aufweisen und/oder die Einhausungssegmente (8, 9, 10, 11) insbesondere mittels Linearlagern (19), bevorzugt Lineargleitlagern, an den Schienen (16, 17) bewegbar geführt werden.

11. Vorrichtung (1) nach Anspruch 10, **dadurch gekennzeichnet, dass** die Schienen (16, 17) an Trägerprofilen (18) befestigt sind, wobei die Trägerprofile (18) insbesondere aus Stahl bestehen und/ oder einen L-förmigen Querschnitt aufweisen und/oder die Trägerprofile (18) insbesondere zur Befestigung am Boden oder am Maschinenbett oder Maschinengestell einer Schneidanlage vorgesehen sind, wobei sich die Trägerprofile (18) bevorzugt über die gesamte Länge des Arbeitsraums erstrecken.

12. Vorrichtung (1) nach einem der vorherigen Ansprüche, **dadurch gekennzeichnet, dass** diese ferner eine Antriebseinheit, insbesondere eine elektrische Antriebseinheit zum Bewegen der Einhausungssegmente (8, 9, 10, 11) umfasst, und/oder dass mindestens ein Stirnwandelement (20) einen stationären Teilabschnitt (22) zur festen Verankerung am Boden oder in Bodennähe und einen bewegbaren Teilabschnitt (24) umfasst, wobei insbesondere der bewegbare Teilabschnitt (24) mittels eines Hebemechanismus auf den stationären Teilabschnitt (22) aufsetzbar ist, um die Stirnseite des Arbeitsraums vollständig zu verschließen, und von dem stationären Teilabschnitt (22) abnehmbar ist, um einen Zugang zu dem Arbeitsraum von außen zu ermöglichen und/oder dass sich der stationäre (22) und der bewegbare Teilabschnitt (24) über die gesamte Breite der Stirnseite des Arbeitsraums erstrecken.

13. Vorrichtung (1) nach Anspruch 11 und nach Anspruch 12, **dadurch gekennzeichnet, dass** der stationäre Teilabschnitt (22) stirnseitig an den Trägerprofilen (18) befestigt ist.

14. Vorrichtung (1) nach einem der vorherigen Ansprüche, **dadurch gekennzeichnet, dass** mindestens ein Stirnwandelement (20, 21) ein sich über einen Teilbereich der Stirnseite des Arbeitsraums erstreckendes Rolltor aufweist, und/oder dass mindestens ein Stirnwandelement (21) an einem im ausgefahrenen Zustand in Längsrichtung außenliegenden Einhausungssegment (11) fixiert ist und/oder eine Tür, insbesondere eine Anschlagtür aufweist, und/oder dass mindestens eine Stirnwandelement (20) oder ein Einhausungssegment ein Fensterelement aufweist.

15. Schneidanlage (2), insbesondere Laserschneidanlage und vorzugsweise zweidimensionale Laserschneidanlage zur Bearbeitung von plattenförmigen Werkstücken mit einer Vorrichtung (1) zur allseitigen Einhausung nach einem der Ansprüche 1 bis 26, wobei die Schneidanlage (2) insbesondere als Faserlaserschneidanlage ausgebildet ist.
